# EUROPEAN PATENT SPECIFICATION

(11) **EP 4 134 729 B1**
(45) Date of publication and mention of the grant of the patent: **04.03.2026**
(21) Application number: 21807913.5
(22) Date of filing: 02.04.2021
(51) Int. Cl.: G02B 5/04, G02B 27/01

(54) **OPTICAL DISPLAY ASSEMBLY AND INTELLIGENT WEARABLE DEVICE**
OPTISCHE ANZEIGEANORDNUNG UND INTELLIGENTE TRAGBARE VORRICHTUNG
ENSEMBLE D'AFFICHAGE OPTIQUE ET DISPOSITIF VESTIMENTAIRE INTELLIGENT

(30) Priority: 20.05.2020 CN 202010429949; 20.05.2020 CN 202020858903 U
(43) Date of publication of application: 15.02.2023
(73) Proprietor: GUANGDONG OPPO MOBILE TELECOMMUNICATIONS CORP., LTD., Dongguan, Guangdong 523860 (CN)
(72) Inventor: HUANG, Kai, Dongguan, Guangdong 523860 (CN)
(74) Representative: Thorniley, Peter
(86) International application number: PCT/CN2021/085355
(87) International publication number: WO 2021/232967

(56) References cited:
- CN-A- 108 351 528
- CN-A- 108 885 301
- CN-A- 109 445 096
- CN-A- 111 562 674
- CN-U- 212 181 169
- US-A1- 2010 254 018
- US-A1- 2017 371 160
- US-B2- 6 542 307

## Description

### FIELD

The present disclosure relates to the technical field of optical imaging, and particularly, to an optical display assembly and an intelligent wearable device.

### BACKGROUND

With the development of technology, intelligent wearable devices, such as AR glasses or VR glasses, have gradually entered people's lives. Generally, people wear the intelligent wearable device on their heads to view an image projected by an optical-mechanical module located on two sides, thereby achieving virtual reality or augmented reality. US 2017/371160 A1 provides a head-mounted imaging apparatus having a frame that houses a left-eye imaging apparatus and a right-eye imaging apparatus, each imaging apparatus energizable to form a virtual image to an eye of an observer. US 2010/0254018 A1 discloses a beam segmentor for enlarging viewing aperture of microdisplay.

### SUMMARY

The invention provides an optical display assembly and an intelligent wearable device.

The optical display assembly provided by the embodiments of the present disclosure includes an optical-mechanical module, an optical transmission element, and a light path altering element. The optical-mechanical module is configured to cast light for projecting an image. The optical transmission element has a first surface, a second surface opposite to the first surface, and a third surface connecting the first surface with the second surface. The optical transmission element is configured to receive light on the first surface and reflect the light in an interior between the first surface and the second surface. The first surface is at a first angle with respect to a light-emitting surface of the optical-mechanical module. The light path altering element is disposed between the optical transmission element and the optical-mechanical module. The light path altering element is configured to receive the light and cast the light onto the first surface. The light exits the first surface. A distance between the third surface and a center of a position at which the light exits the first surface is within a predetermined range. The light path altering element is combined with the optical-mechanical module through a common carrier, the light path altering element being spaced apart from or attached to the optical-mechanical module.

The intelligent wearable device provided by the embodiments of the present disclosure includes frames, legs, and at least one optical display assembly according to any of the above embodiments of the present disclosure. The optical-mechanical module and the light path altering element are disposed in one of the legs. The optical transmission element is disposed in one of the frames.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

The above and/or additional aspects and advantages of the present disclosure will become more apparent and more understandable from the description of embodiments taken in conjunction with the accompanying drawings, in which:
FIG. 1 is a schematic structural diagram of an intelligent wearable device according to some embodiments of the present disclosure.
FIG. 2 is a schematic structural diagram of an optical display assembly according to some embodiments of the present disclosure.
FIG. 3 is a schematic structural diagram of an optical display assembly according to some embodiments of the present disclosure.
FIG. 4 is a schematic structural diagram of an optical display assembly according to some embodiments of the present disclosure.
FIG. 5 is a schematic structural diagram of an intelligent wearable device according to some embodiments of the present disclosure.
FIG. 6 is a schematic structural diagram of an optical display assembly according to some embodiments of the present disclosure.
FIG. 7 is a schematic structural diagram of an optical display assembly according to some embodiments of the present disclosure.
FIG. 8 is a schematic structural diagram of an intelligent wearable device according to some embodiments of the present disclosure.
FIG. 9 is a schematic structural diagram of an optical display assembly according to some embodiments of the present disclosure.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

Since a human head is usually narrow in the front and wide in the back, people may pull two sides of an intelligent wearable device apart after wearing the intelligent wearable device, and thus people cannot see an image projected by an optical-mechanical module in an optimal viewing angle.

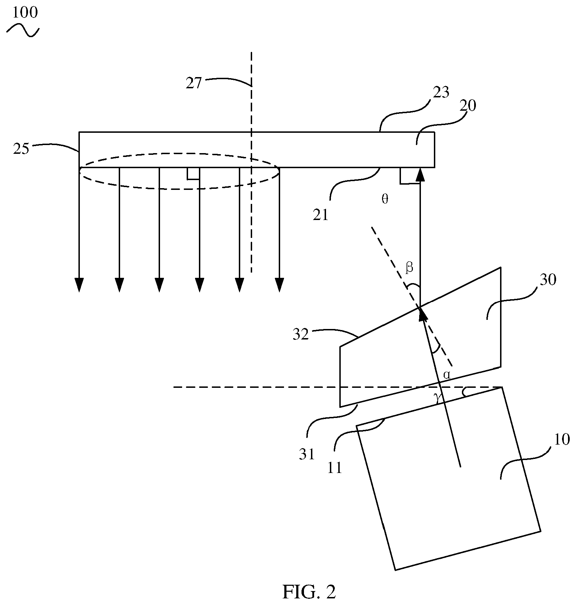

Referring to FIG. 2, the present disclosure provides an optical display assembly 100. The optical display assembly 100 includes an optical-mechanical module 10, an optical transmission element 20, and a light path altering element 30. The optical-mechanical module 10 is configured to cast light for projecting an image. The optical transmission element 20 has a first surface 21, a second surface 23 opposite to the first surface 21, and a third surface 25 connecting the first surface 21 to the second surface 23. The optical transmission element 20 is configured to receive the light on the first surface 21 and reflect the light in an interior between the first surface 21 and the second surface 23. The first surface 21 is at a first angle with respect to a light-emitting surface 11 of the optical-mechanical module 10. The light path altering element 30 is disposed between the optical transmission element 20 and the optical-mechanical module 10. The light path altering element 30 is configured to receive the light and cast the light onto the first surface 21. The light exits the first surface 21. A distance between a center of a position at which the light exits the first surface 21 and the third surface 25 is within a predetermined range.

In some embodiments, the distance between the center of the position at which the light exits the first surface 21 and the third surface 25 is equal to a distance between a central axis of the optical transmission element 20 and the third surface 35.

In some embodiments, the light exits perpendicularly to the first surface 21.

In some embodiments, the distance between the center of the position at which the light exits the first surface 21 and the third surface 35 is smaller than the distance between the central axis of the optical transmission element 20 and the third surface 35.

In some embodiments, the light exits at a second angle with respect to the first surface 21.

In some embodiments, the optical transmission element 20 is configured to cast the light from the first surface 21 to a human eye. The center of the position at which the light exits the first surface 21 is located within an orthographic projection of the human eye on the first surface 21.

In some embodiments, the optical transmission element 20 is configured to cast the light from the first surface 21 toa human eye, and the center of the position at which the light exits the first surface 21 and the optical-mechanical module 10 are located on two sides of the orthographic projection, respectively.

In some embodiments, the light path altering element 30 has an incident surface 31 and an emergent surface 32; the incident surface 31 is parallel to the light-emitting surface 11; and the light perpendicularly enters the first surface 21 subsequent to exiting the emergent surface 32.

In some embodiments, the light path altering element 30 has the incident surface 31 and the emergent surface 32; the incident surface 31 is parallel to the light-emitting surface 11; and the light obliquely enters the first surface 21 subsequent to exiting the emergent surface 32.

In some embodiments, the light path altering element 30 is combined with the optical-mechanical module 10 through a common carrier, and the light path altering element 30 is spaced apart from or attached to the optical-mechanical module 10.

In some embodiments, a one-piece structure is formed by the light path altering element 30 and the optical-mechanical module 10 through a threaded connection, gluing, welding, or snapping. The one-piece structure is mounted in the common carrier.

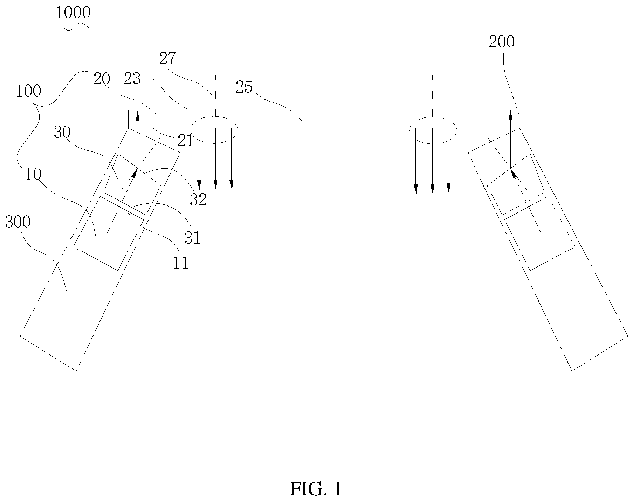

Referring to FIG. 1 and FIG. 2, the present disclosure provides an intelligent wearable device 1000. The intelligent wearable device 1000 includes frames 200, legs 300, and the optical display assemblies 100. The optical-mechanical module 10 and the light path altering element 30 are disposed in the leg 300. The optical transmission element 20 is disposed in the frame 200. The optical display assembly 100 includes the optical-mechanical module 10, the optical transmission element 20 and the light path altering element 30. The optical-mechanical module 10 is configured to cast light for projecting the image. The optical transmission element 20 has a first surface 21, a second surface 23 opposite to the first surface 21, and a third surface 25 connecting the first surface 21 to the second surface 23. The optical transmission element 20 is configured to receive the light on the first surface 21 and reflect the light in the interior between the first surface 21 and the second surface 23. The first surface 21 is at a first angle with respect to a light-emitting surface 11 of the optical-mechanical module 10. The light path altering element 30 is disposed between the optical transmission element 20 and the optical-mechanical module 10. The light path altering element 30 is configured to receive the light and cast the light onto the first surface 21. The light exits the first surface 21. A distance between a center of a position at which the light exits the first surface 21 and the third surface 25 is within the predetermined range.

In some embodiments, the distance between the center of the position at which the light exits the first surface 21 and the third surface 25 is equal to a distance between a central axis of the optical transmission element 20 and the third surface 35.

In some embodiments, the light exits perpendicularly to the first surface 21.

In some embodiments, the distance between the center of the position at which the light exits the first surface 21 and the third surface 35 is smaller than the distance between the central axis of the optical transmission element 20 and the third surface 35.

In some embodiments, the light exits at a second angle with respect to the first surface 21.

In some embodiments, the optical transmission element 20 is configured to cast the light from the first surface 21 to a human eye, and the center of the position at which the light exits the first surface 21 is located within an orthographic projection of the human eye on the first surface 21.

In some embodiments, the optical transmission element 20 is configured to cast the light from the first surface 21 toa human eye, and the center of the position at which the light exits the first surface 21 and the optical-mechanical module 10 are located on two sides of the orthographic projection, respectively.

In some embodiments, the light path altering element 30 has an incident surface 31 and an emergent surface 32; the incident surface 31 is parallel to the light-emitting surface 11; and the light perpendicularly enters the first surface 21 subsequent to exiting the emergent surface 32.

In some embodiments, two optical display assemblies 100 are provided. Two optical-mechanical modules 10 and two light path altering elements 30 are disposed in two legs 300, respectively. Two optical transmission elements 20 are disposed in two frames 200, respectively.

Referring to FIG. 1, the embodiments of the present disclosure provide an intelligent wearable device 1000. The intelligent wearable device 1000 may be intelligent AR glasses, an intelligent AR eye patch, an intelligent AR helmet, an intelligent AR headband, intelligent VR glasses, an intelligent VR eye patch, an intelligent VR headband, or an intelligent VR headband, etc. As an example, in the embodiments of the present disclosure, the intelligent AR glasses serve as the intelligent wearable device 1000 for illustration.

In some embodiments, referring to FIG. 2, the intelligent wearable device 1000 includes two optical display assemblies 100, two frames 200, and two legs 300. The two frames 200 are in one-to-one correspondence with the two legs 300. Each leg 300 is connected to an outer side of the corresponding frame 200.

The optical display assembly 100 includes the optical-mechanical module 10, the optical transmission element 20 and the light path altering element 30. The optical-mechanical module 10 and the light path altering element 30 are disposed in the leg 300. The optical transmission element 20 is disposed in the frame 200. The optical-mechanical module 10 is configured to cast light for projecting the image. The optical transmission element 20 has the first surface 21, the second surface 23 opposite to the first surface 21, and the third surface 25 connecting the first surface 21 to the second surface 23. The optical transmission element 20 is configured to receive the light on the first surface 21 and reflect the light in the interior between the first surface 21 and the second surface 23. The first surface 21 is at the first angle γ with respect to the light-emitting surface 11 of the optical-mechanical module 10. The light path altering element 30 is disposed between the optical transmission element 20 and the optical-mechanical module 10. The light path altering element 30 is configured to receive the light and cast the light onto the first surface 21. The light exits the first surface 21. The distance between the center of the position at which the light exits the first surface 21 and the third surface 25 is within the predetermined range.

The number of the optical display assembly 100 may be one or two. When one optical display assembly 100 is provided, the optical-mechanical module 10 and the light path altering element 30 are disposed in one of the legs 300, and the optical transmission element 20 is disposed in the frame 200 corresponding to the leg 300. In this case, the intelligent wearable device 1000 can provide a user with a virtual image or an augmented reality image at one side of vision. The image projected by the optical-mechanical module 10 will not enter a range of the other side of vision of the user, thereby preventing the user's vision from being influenced in a specific occasion. For example, the specific occasion may be that the user is driving a car or a vehicle such as an aircraft, and the user does not want the virtual image to block one side of vision in front of the field of view.

When two optical display assemblies 100 are provided, two optical-mechanical modules 10 and two light path altering elements 30 are disposed in two legs 300, respectively, and two optical transmission elements 20 are disposed in two frames 200, respectively. In this case, the intelligent wearable device 1000 can provide the user with the virtual image or the augmented reality image at two sides of vision, thereby enhancing the user's sensory immersion in a specific usage scenario such as playing game.

In some embodiments, the optical-mechanical module 10 includes a structural assembly, a display screen, and a lens. Both of the display screen and the lens are disposed within the structural assembly. The structural assembly is configured to protect the display screen and the lens, for example, against dust, water, drops, and the like. The display screen is configured to display an image. The lens is disposed in front of the display screen to converge or diffuse the light emitted from the display screen. The optical-mechanical module 10 is configured to cast the light for projecting the image. That is, the optical-mechanical module 10 is configured to amplify and output the image displayed by the display screen. It should be noted that, the light projected by the optical-mechanical module 10 into the optical transmission element 20 is located within a specified range on the first surface 21. For example, a size of the specified range (when the specified range is rectangular, the size is a width thereof; and when the specified range is circular, the size is a radius thereof) may be smaller than or equal to 5 mm, or smaller than or equal to 10 mm, or smaller than or equal to 15 mm, etc.

The first angle γ may be an acute angle (a dotted line in FIG. 2 meeting the optical-mechanical module 10 is parallel to the first surface 21), i.e., γ< 90°. The first angle γ may be 15°, 20°, 30°, 45°, 55°, 60°, 67°, 70°, 80°, or 88°, etc. In the present example, when the leg 300 is perpendicular to the optical transmission element 20, in order to allow the light emitted by the optical-mechanical module 10 to perpendicularly enter the optical transmission element 20 and then perpendicularly enter the human eye, a central axis of the leg 300 is only required to be parallel to an optical axis of the optical-mechanical module 10, namely, the optical axis of the optical-mechanical module 10 is perpendicular to the optical transmission element 20. However, people may pull two sides of the intelligent wearable device 1000 apart after wearing the intelligent wearable device 1000. In terms of a structural design, according to the implementation of the present disclosure, the central axis of the leg 300 is inclined at an angle with respect to the optical transmission element 20 (the frame 200), rather than perpendicular to the optical transmission element 20 (the frame 200), which is more ergonomic. When a width of the leg 300 is remained unchanged and the optical axis of the optical-mechanical module 10 is remained to be perpendicular to the optical transmission element 20, the leg 300 may not wrap the optical-mechanical module 10 with the optical axis perpendicular to the optical transmission element 20 only by rotating the leg 300 to form the angle. One solution therefor may be increasing the size of the leg 300 until it can wrap the optical-mechanical module 10. Such a solution may increase an outer dimension of the leg 300, thereby degrading the appearance and increasing a volume and weight of the leg 300 as well as costs while affecting the wearing comfort. In the intelligent wearable device 1000 and the optical display assembly 100 according to the present disclosure, the first angle γ is included between the first surface 21 and the light-emitting surface 11 of the optical-mechanical module 10, allowing both the light path altering element 30 and the optical-mechanical module 10 to be disposed in the intelligent wearable device 1000, while the optical axis of the optical assembly formed by the light path altering element 30 and the optical-mechanical module 10 remains parallel to the central axis of the leg 300. In this case, the optical assembly formed by the light path altering element 30 and the optical-mechanical module 10 is inclined at the same angle with respect to the optical transmission element 20, such that the optical-mechanical module 10 and the light path altering element 30 can be wrapped by the leg in the intelligent wearable device 1000 without increasing the size and weight of the leg. In this way, the intelligent wearable device 1000 can be light and compact in structure.

The optical transmission element 20 is configured to allow the light for projecting the image and emitted from the optical-mechanical module 10 to perform a total reflection in an interior of the optical transmission element 20 and then exit the light-outgoing position of the optical transmission element 20. The optical transmission element 20 includes an optical waveguide such as a waveguide sheet, an optical fiber, etc. The optical waveguide may be made of glass or plastic. In the present embodiment, the optical transmission element 20 is the waveguide sheet. In the intelligent wearable device 1000 according to the embodiments of the present disclosure, the optical transmission element 20 (i.e., the optical waveguide) is thin and highly permeable to an external light. Thus, light entering the interior of the optical transmission element 20 from the first surface 21 advances in the light waveguide by multiple reflections like a swimming snake without being transmitted out. The optical transmission element 20 couples the light into a glass substrate thereof, transmits the light to the front of the human eye based on the principle of "total reflection" and then emits the light from the first surface 21. In the entire transmission process, the optical transmission element 20 is only responsible for transmitting the image projected by the optical-mechanical module 10. The human eye can see the virtual image projected by the optical-mechanical module 10. At the same time, due to a high transmissivity of the optical transmission element 20, the user may also see the real world, thus enabling a reality enhancement effect. Due to the presence of the optical transmission element 20 in the intelligent wearable device 1000 according to the present disclosure, the optical-mechanical module 10 can be disposed away from the frame 200, for example, disposed on a side surface of the intelligent wearable device 1000, namely, on the leg 300. In this way, an obstruction of external vision by the optical-mechanical module 10 can be greatly reduced and a weight distribution can be more ergonomic, thus improving a wearing experience of the intelligent wearable device 1000.

The light path altering element 30 may be a prism, a lens, an optical grating, a parallel flat plate, a Fresnel's zone plate, birefringent crystals, liquid crystals, etc., and it is configured to alter a light transmission path. In the embodiments of the present disclosure, the light path altering element 30 is a prism.

The optical axis of the optical assembly formed by the light path altering element 30 and the optical-mechanical module 10 remains parallel to the central axis of the leg 300, the aforementioned problem that the leg 300 cannot wrap the optical-mechanical module 10 with the optical axis perpendicular to the optical transmission element 20 can be solved. However, in this case, the light from the optical-mechanical module 10 cannot perpendicularly enter and exit the optical transmission element 20 and cannot enter the human eye, and thus people may be sill unbale to view the image projected by the optical-mechanical module 10 in the optimal viewing angle. In this regard, in the embodiments of the present disclosure, the light path altering element 30 and the optical transmission element 20 cooperate to keep the distance between the center of the position at which the light exits the first surface 21 and the third surface 25 within the predetermined range. The predetermined range may be a distance to the third surface 25, ranging from 10 mm to 30 mm, including 10 mm, 15 mm, 18 mm, 20 mm, 22 mm, 26 mm, 28 mm, 29 mm, and 30 mm, etc. The predetermined range may be a range indicated by a dotted circle as illustrated in FIG. 1. The predetermined range can ensure that a projection display position of the optical display assembly 100 matches the user's optimal viewing angle for the projected image, thereby enhancing the user experience. In some implementations, the center of the position at which the light exits the first surface 21 may correspond to a position of the central axis 27 of the optical transmission element 20. In this case, the light may be cast from a central area of the frame 200 to the front of the user, enabling people to view the image projected by the optical-mechanical module 10 in the optimal viewing angle, thereby providing a better projection perspective and increasing a sense of reality. If the intelligent wearable device 1000 is intelligent AR glasses, when people wear the intelligent wearable device 1000, the human eye is usually aligned with the central axis 27 of the optical transmission element 20. Thus, the center of the position at which the light exits the first surface 21 may also correspond to a center position of the orthographic projection of the human eye on the first surface 21 when wearing the intelligent wearable device 1000. In this way, the user can see the projected image without scrolling eyeball, and thus can have a better viewing angle and the enhanced sense of reality.

In summary, in the optical display assembly 100 and the intelligent wearable device 1000 according to the present disclosure, by utilizing the first angle γ included between the light-emitting surface 11 of the optical-mechanical module 10 and the first surface 21 of the optical transmission element 20, the optical display assembly 100 can easily match the human head, which is narrow in the front and wide in the back. At the same time, in the optical display assembly 100 and the intelligent wearable device 1000 according to the present disclosure, by additionally providing the light path altering element 30 between the optical-mechanical module 10 and the optical path transmission element 20, and by changing a transmission direction of the light emitted from the optical-mechanical module 10 through the light path altering element 30, the light can enter the optical transmission element 20 at one end of the first surface 21, and then exit the optical transmission element 20 at the other end of the first surface 21 after being transmitted within the optical transmission element 20; and the distance between the center of the light-outgoing position and the third surface 25 is within the predetermined range, such that the user can view the image projected by the optical-mechanical module 10 from in the optimal viewing angle.

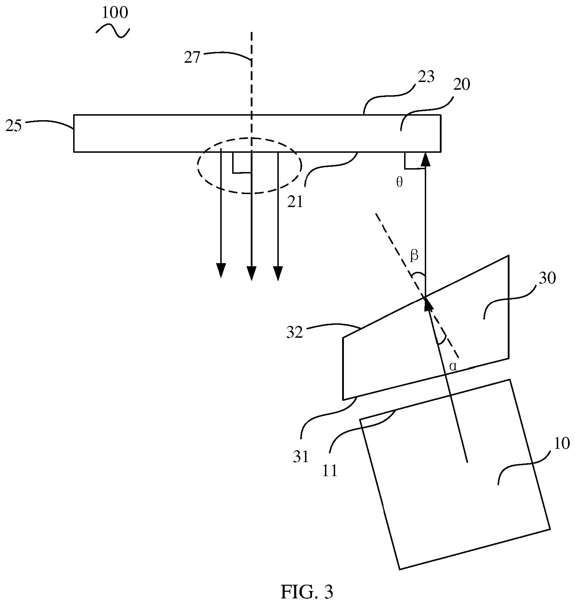

Referring to FIG. 3, in some embodiments, the light path altering element 30 and the optical transmission element 20 act together to allow the distance between the center of the position at which the light exits the first surface 21 and the third surface 25 to be equal to the distance between the central axis 27 of the optical transmission element 20 and the third surface 25. That is, the center of the light-outgoing position is located on the central axis 27 of the optical transmission element 20, thereby ensuring that the light-outgoing position is located directly in front of the user. In this way, the projection display position of the optical display assembly 100 matches the user's optimal viewing angle for the projected image, and thus the user can have a better projection perspective and the enhanced sense of reality and user experience.

Further referring to FIG. 3, in some embodiments, the light path altering element 30 includes an incident surface 31 and an emergent surface 32, which are opposite to each other. The incident surface 31 is parallel to the light-emitting surface 11 of the optical-mechanical module 10. The angle included between the emergent surface 32 and the incident surface 31 is a first acute angle, so that the light inside the light path altering element 30 is refracted (deflected to the right) and then perpendicularly enters the optical transmission element 20 through the first surface 21. The light entering the interior of the optical transmission element 20 then exits perpendicularly to the first surface 21 after multiple total reflections. As the human eye is usually located directly opposite to the central axis 27 of the optical transmission element 20, the light perpendicularly emitted from the first surface 21 may enter the human eye perpendicularly. In this case, the user can see the image projected by the optical-mechanical module 10 in the optimal viewing angle, and the path of the light casting to the human eye is the shortest, which shortens the time for the user to see the projected image, thereby providing the optimal user experience.

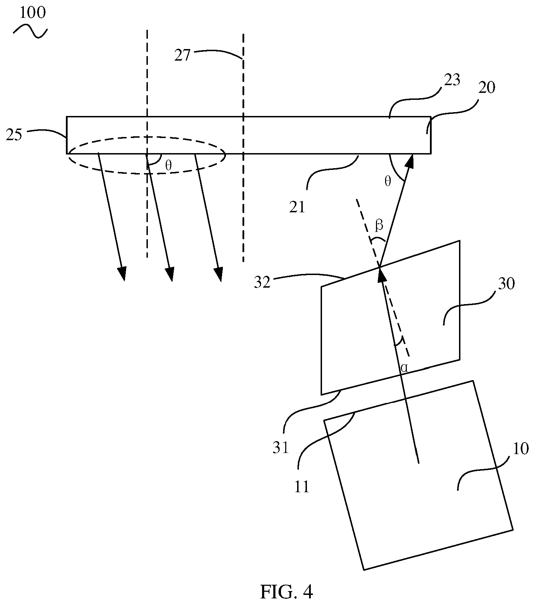

Referring to FIG. 4, in some embodiments, the light path altering element 30 and the optical transmission element 20 act together to allow the distance between the center of the position at which the light exits the first surface 21 and the third surface 25 to be smaller than the distance between the central axis 27 of the optical transmission element 20 and the third surface 25. In this case the light-outgoing position of the light on the first surface 21 is located in a region in a dashed circle illustrated in FIG. 4. The center of the light-outgoing position of the light on the first surface 21 is offset from the central axis 27 and adjacent to the third surface 25.

In some embodiments, further referring to FIG. 4, the light path altering element 30 includes an incident surface 31 and an emergent surface 32 that are disposed opposite to each other. The incident surface 31 is parallel to the light-emitting surface 11 of the optical-mechanical module 10. The angle included between the emergent surface 32 and the incident surface 31 is a second acute angle. The second acute angle is smaller than the first acute angle, so that the light inside the light path altering element 30 can obliquely enter the optical transmission element 20 through the first surface 21 after being refracted (deflected the right to a greater extent than that in FIG. 3). The light entering the interior of the optical transmission element 20 obliquely exits at an angle with respect to the first surface 21 (inclined towards a direction of the central axis 27) after multiple total reflections. As the human eye is usually located directly opposite to the central axis 27 of the optical transmission element 20, the light emitted perpendicularly from the first surface 21 can still enter the human eye perpendicularly. In this case, the user can see the image projected by the optical-mechanical module 10 in the optimal viewing angle, and the image projected by the optical-mechanical module 10 is located at one side of the optical transmission element 20 away from the optical-mechanical module 10, rather than directly in front of the user. Thus, it would not block the user's field of view, preventing the user's vision from being influenced in a specific occasion. The specific occasion may be that when the user is driving a car or driving a vehicle such as an aircraft while using the intelligent wearable device 1000. In this case, the projected image is not in front of the user and does not block the user's field of view, thus ensuring the safety for the user using the intelligent wearable device 1000 in the specific occasion.

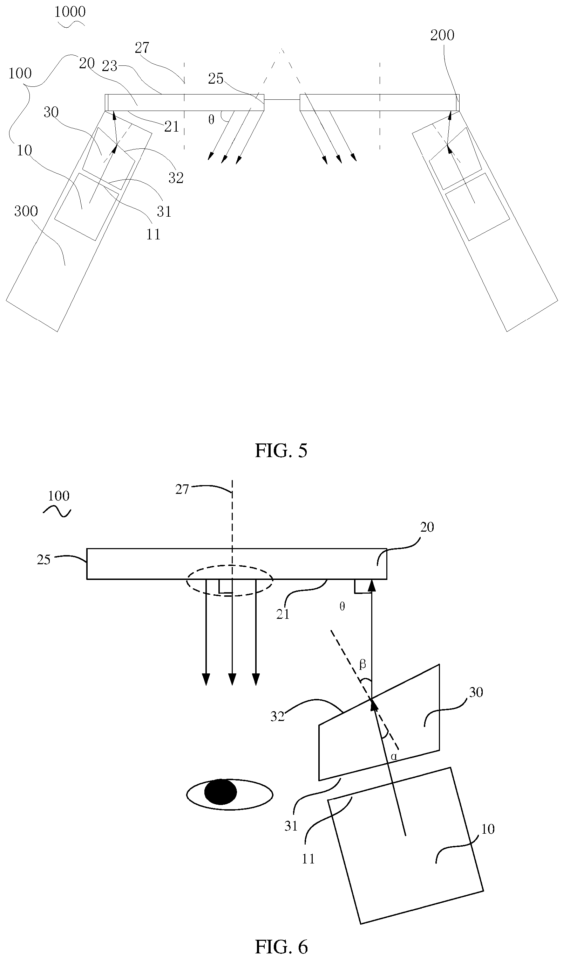

Referring to FIG. 5, in some embodiments, the light entering the interior of the optical transmission element 20 obliquely exits at an angle with respect to the first surface 21 after multiple total reflections, including the light exiting at the second angle with respect to the first surface 21. The second angle may be an acute angle as illustrated by an angle θ in FIG. 5, namely, the second angle θ is smaller than 90°. The second angle θ may be 19°, 25°, 35°, 45°, 50°, 60°, 67°, 70°, 82°, or 89°, etc. The second angle may also refer to an angle complementary to the angle θ in FIG. 5, and in this case, the second angle is an obtuse angle. When the light exits at the second angle θ with respect to the first surface 21, the light obliquely entering the optical transmission element 20 can obliquely exits the first surface 21 and can enter the human eye. In this case, the user can see the image projected by the optical-mechanical module 10 in the optimal viewing angle, and the image projected by the optical-mechanical module 10 is located at one side of the optical transmission element 20 away from the optical-mechanical module 10, rather than directly in front of the user. Thus, it would not block the user's field of view, preventing the user's vision from being influenced in a specific occasion, thus ensuring the safety for the user using the intelligent wearable device 1000 in the specific occasion.

Referring to FIG. 6, in some embodiments, the optical transmission element 20 is configured to cast the light from the first surface 21 to the human eye. The center of the position at which the light exits the first surface 21 is located within an orthographic projection of the human eye on the first surface 21.

In some embodiments, the orthographic projection of the human eye on the first surface 21 is indicated by a dotted circle in FIG. 6. The light emitted from the orthographic projection of the human eye on the first surface 21 can ensure that the projected image is directly in front of the human eye. Thus, the user can easily see the projected image without scrolling the eyeball, thereby alleviating eye fatigue.

Further referring to FIG. 6, in some embodiments, the light path altering element 30 includes an incident surface 31 and an emergent surface 32 that are disposed opposite to each other. The incident surface 31 is parallel to the light-emitting surface 11 of the optical-mechanical module 10. The angle included between the emergent surface 32 and the incident surface 31 is a third acute angle, allowing the light inside the light path altering element 30 to perpendicularly enter the optical transmission element 20 through the first surface 21 subsequent being refracted (deflected to the right). The light entering the interior of the optical transmission element 20 perpendicularly exits the first surface 21 after multiple total reflections. The third acute angle may be the same as or different from the first acute angle.

In one example, the human eye is located directly opposite to the central axis 27 of the optical transmission element 20, so the light emitted perpendicularly from the first surface 21 can enter the human eye perpendicularly. In this case, the user can see the image projected by the optical-mechanical module 10 in the optimal viewing angle, and the route of the light casting to the human eye is the shortest, which shortens the time for the user to see the projected image, thereby providing the optimal user experience.

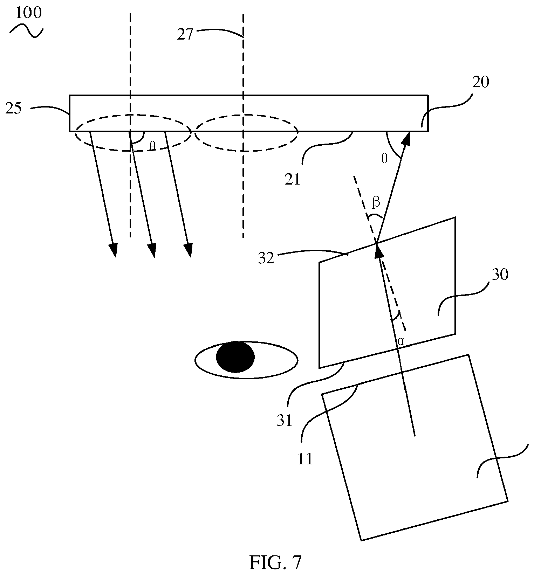

Referring to FIG. 7, in some embodiments, the optical transmission element 20 is configured to cast the light from the first surface 21 to the human eye, and the center of the position at which the light exits the first surface 21 and the optical-mechanical module 10 are located on two sides of the orthographic projection, respectively.

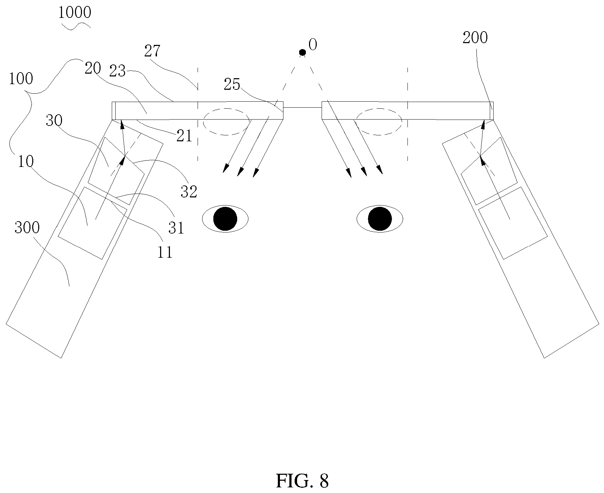

In some embodiments, the orthographic projection of the human eye on the first surface 21 is indicated by a dotted circle in FIG. 7. The center of the position at which the light exits the first surface 21 and the optical-mechanical module 10 are respectively located on two sides of the orthographic projection. In this way, when the user is viewing the projected image, extension lines in an opposite direction of the light incident to both eyes of the user may converge to a point O (as illustrated in FIG. 8), which is comfortable and natural for the human eyes, thereby enhancing the user experience.

Referring further to FIG. 7, in some embodiments, the light path altering element 30 includes an incident surface 31 and an emergent surface 32 that are disposed opposite to each other. The incident surface 31 is parallel to the light-emitting surface 11 of the optical-mechanical module 10. The angle included between the emergent surface 32 and the incident surface 31 is a fourth acute angle. The fourth acute angle is smaller than the third acute angle, so that the light inside the light path altering element 30 can obliquely enter the optical transmission element 20 through the first surface 21 after being refracted (deflected the right to a greater extent than that in FIG. 6). The light entering the interior of the optical transmission element 20 obliquely exits at an angle with respect to the first surface 21 (inclined towards the direction of the central axis 27) after multiple total reflections. The fourth acute angle may be the same as or different from the second acute angle. The fourth acute angle is smaller than the third acute angle.

In an example, the human eye is located directly opposite to the central axis 27 of the optical transmission element 20, and thus the light emitted obliquely from the first surface 21 may obliquely enter the human eye. In this case, the user can see the image projected by the optical-mechanical module 10 in the optimal viewing angle, and the image projected by the optical-mechanical module 10 is located at one side of the optical transmission element 20 away from the optical-mechanical module 10, rather than directly in front of the user. Thus, it would not block the user's field of view, preventing the user's vision from being influenced in a specific occasion, thereby ensuring the safety for the user using the intelligent wearable device 1000 in the specific occasion.

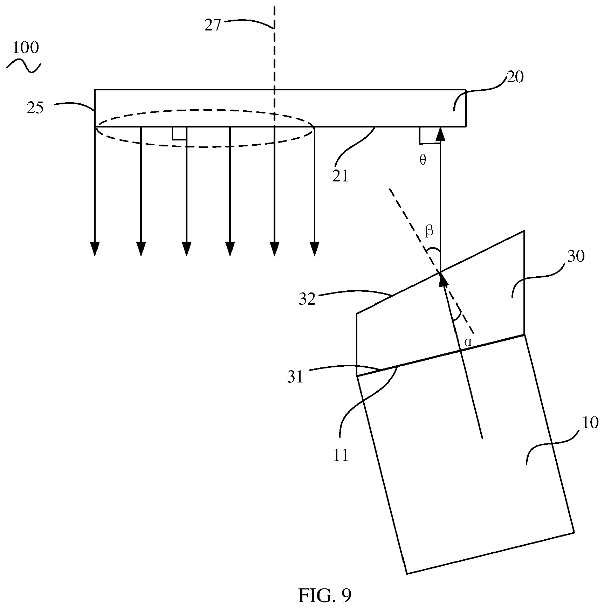

Referring to FIG. 8 and FIG. 9, in some embodiments, the light path altering element 30 is combined with the optical-mechanical module 10. According to the invention, the light path altering element 30 is combined with the optical-mechanical module 10 in such a manner that the light path altering element 30 is combined with the optical-mechanical module 10 through the common carrier. For example, the light path altering element 30 and the optical-mechanical module 10 are both mounted within the carrier, and they may be spaced apart from each other, namely, the light-emitting surface 11 and the incident surface 31 may be spaced apart from each other (as illustrated in FIG. 8). In this way, when using the intelligent wearable device 1000, the friction between the optical-mechanical module 10 and the light path altering element 30, which may damage the optical-mechanical module 10 or the light path altering element 30, can be avoided, and a service life of the intelligent wearable device 1000 can be prolonged. The light path altering element 30 and the optical-mechanical module 10 are both mounted in the carrier, and they may be closely attached to each other, namely, the light-emitting surface 11 is in contact with the incident surface 31. In this way, stray light can be prevented from entering the incident surface 31, thereby improving an imaging quality of the intelligent wearable device 1000 and enhancing the user experience.

In another embodiment, the light path altering element and the optical-mechanical module may form a one-piece structure through the threaded connection, gluing, welding, or snapping. In this case, the one-piece structure is mounted in the common carrier. In this case, the light-emitting surface 11 and the incident surface 31 may also be attached to each other (as illustrated in FIG. 9) to reduce an internal volume of the leg 300, which is conducive to the lightweight of the intelligent wearable device 1000. In addition, the light-emitting surface 11 and the incident surface 31 may be attached to each other to prevent the stray light from entering the incident surface 31, thereby improving the imaging quality of the intelligent wearable device 1000 and enhancing the user experience.

It should be noted that the carrier described herein can be the leg 300 or other housing structure, which is not limited herein.

## Claims

1. An optical display assembly (100), comprising:
an optical-mechanical module (10) configured to cast light for projecting an image;
an optical transmission element (20) having a first surface (21), a second surface (23) opposite to the first surface (21), and a third surface (25) connecting the first surface (21) with the second surface (23), the optical transmission element (20) being configured to receive the light on the first surface (21) and reflect the light in an interior between the first surface (21) and the second surface (23), the first surface (21) being at a first angle with respect to a light-emitting surface (11) of the optical-mechanical module (10); and
a light path altering element (30) disposed between the optical transmission element (20) and the optical-mechanical module (10), the light path altering element (30) being configured to receive the light and cast the light onto the first surface (21), the light exiting the first surface (21), wherein a distance between the third surface (25) and a center of a position at which the light exits the first surface (21) is within a predetermined range,
**characterized in that** the light path altering element (30) is combined with the optical-mechanical module (10) through a common carrier, the light path altering element (30) being spaced apart from or attached to the optical-mechanical module (10).

2. The optical display assembly according to claim 1, wherein the distance between the third surface (25) and the center of the position at which the light exits the first surface (21) is equal to a distance between a central axis of the optical transmission element (20) and the third surface (25).

3. The optical display assembly according to claim 2, wherein the light exits perpendicularly to the first surface (21).

4. The optical display assembly according to claim 1, wherein the distance between the third surface (25) and the center of the position at which the light exits the first surface (21) is smaller than the distance between the central axis of the optical transmission element (20) and the third surface (25).

5. The optical display assembly according to claim 4, wherein the light exits at a second angle with respect to the first surface (21).

6. The optical display assembly according to claim 1, wherein:
the optical transmission element (20) is configured to cast the light from the first surface (21) to a human eye; and
the center of the position at which the light exits the first surface (21) is located within an orthographic projection of the human eye on the first surface (21).

7. The optical display assembly according to claim 1, wherein:
the optical transmission element (20) is configured to cast the light from the first surface (21) to a human eye; and
the center of the position at which the light exits the first surface (21) and the optical-mechanical module (10) are respectively located on two sides of an orthographic projection of the human eye on the first surface (21).

8. The optical display assembly according to claim 2 or 6, wherein the light path altering element (30) has an incident surface (31) and an emergent surface (32), the incident surface (31) being parallel to the light-emitting surface (11), and the light perpendicularly entering the first surface (21) subsequent to exiting the emergent surface (32).

9. The optical display assembly according to claim 4 or 7, wherein the light path altering element (30) has an incident surface (31) and an emergent surface (32), the incident surface (31) being parallel to the light-emitting surface (11), and the light obliquely entering the first surface (21) subsequent to exiting the emergent surface (32).

10. The optical display assembly according to claim 1, wherein:
a one-piece structure is formed by the light path altering element (30) and the optical-mechanical module (10) through a threaded connection, gluing, welding, or snapping; and
the one-piece structure is mounted in the common carrier.

11. An intelligent wearable device, comprising:
a frame (200);
a leg (300); and
the optical display assembly (100) according to any one of claims 1 to 10,
wherein:
the optical-mechanical module (10) and the light path altering element (30) are disposed in the leg (300); and
the optical transmission element (20) is disposed in the frame (200).

12. The intelligent wearable device according to claim 11, wherein:
two frames (200), two legs (300), and two optical display assemblies (100) are provided;
the optical-mechanical modules (10) and the light path altering elements (30) of each of the two optical display assemblies (100) are disposed in a corresponding one leg of the two legs (300); and
the optical transmission element (20) of each of the two optical display assemblies (100) is disposed in a corresponding one frame of the two frames (200).

## Patentansprüche

1. Baugruppe (100) für eine optische Anzeige, umfassend:
ein optomechanisches Modul (10), ausgelegt zum Werfen von Licht zum Projizieren eines Bilds;
ein optisches Transmissionselement (20), das eine erste Fläche (21), eine zweite Fläche (23), der ersten Fläche (21) gegenüberliegend, und eine dritte Fläche (25), welche die erste Fläche (21) mit der zweiten Fläche (23) verbindet, aufweist, wobei das optische Transmissionselement (20) ausgelegt ist zum Empfangen des Lichts auf der ersten Fläche (21) und Reflektieren des Lichts in einem Inneren zwischen der ersten Fläche (21) und der zweiten Fläche (23), wobei die erste Fläche (21) in einem ersten Winkel in Bezug auf eine lichtemittierende Fläche (11) des optomechanischen Moduls (10) liegt; und
ein Lichtwegänderungselement (30), angeordnet zwischen dem optischen Transmissionselement (20) und dem optomechanischen Modul (10), wobei das Lichtwegänderungselement (30) ausgelegt ist zum Empfangen des Lichts und Werfen des Lichts auf die erste Fläche (21), wobei das Licht aus der ersten Fläche (21) austritt, wobei eine Distanz zwischen der dritten Fläche (25) und einer Mitte einer Position, an welcher das Licht aus der ersten Fläche (21) austritt, innerhalb eines vorbestimmten Bereichs liegt,
**dadurch gekennzeichnet, dass** das Lichtwegänderungselement (30) mit dem optomechanischen Modul (10) über einen gemeinsamen Träger kombiniert ist,
wobei das Lichtwegänderungselement (30) von dem optomechanischen Modul (10) beabstandet ist oder an diesem angebracht ist.

2. Baugruppe für eine optische Anzeige nach Anspruch 1, wobei die Distanz zwischen der dritten Fläche (25) und der Mitte der Position, an welcher das Licht aus der ersten Fläche (21) austritt, gleich einer Distanz zwischen einer Mittelachse des optischen Transmissionselements (20) und der dritten Fläche (25) ist.

3. Baugruppe für eine optische Anzeige nach Anspruch 2, wobei das Licht senkrecht zur ersten Fläche (21) austritt.

4. Baugruppe für eine optische Anzeige nach Anspruch 1, wobei die Distanz zwischen der dritten Fläche (25) und der Mitte der Position, an welcher das Licht aus der ersten Fläche (21) austritt, kleiner als die Distanz zwischen der Mittelachse des optischen Transmissionselements (20) und der dritten Fläche (25) ist.

5. Baugruppe für eine optische Anzeige nach Anspruch 4, wobei das Licht in einem zweiten Winkel in Bezug zur ersten Fläche (21) austritt.

6. Baugruppe für eine optische Anzeige nach Anspruch 1, wobei:
das optische Übertragungselement (20) ausgelegt ist zum Werfen des Lichts von der ersten Fläche (21) zu einem menschlichen Auge; und
die Mitte der Position, an welcher das Licht aus der ersten Fläche (21) austritt, sich innerhalb einer orthographischen Projektion des menschlichen Auges auf die erste Fläche (21) befindet.

7. Baugruppe für eine optische Anzeige nach Anspruch 1, wobei:
das optische Übertragungselement (20) ausgelegt ist zum Werfen des Lichts von der ersten Fläche (21) zu einem menschlichen Auge; und
die Mitte der Position, an welcher das Licht aus der ersten Fläche (21) austritt, und das optomechanische Modul (10) sich auf zwei Seiten einer orthographischen Projektion des menschlichen Auges auf die erste Fläche (21) befinden.

8. Baugruppe für eine optische Anzeige nach Anspruch 2 oder 6, wobei das Lichtwegänderungselement (30) eine Einfallsfläche (31) und eine Austrittsfläche (32) aufweist, wobei die Einfallsfläche (31) zu der lichtemittierenden Fläche (11) parallel ist und das Licht nach Austreten aus der Austrittsfläche (32) senkrecht in die erste Fläche (21) eintritt.

9. Baugruppe für eine optische Anzeige nach Anspruch 4 oder 7, wobei das Lichtwegänderungselement (30) eine Einfallsfläche (31) und eine Austrittsfläche (32) aufweist, wobei die Einfallsfläche (31) zu der lichtemittierenden Fläche (11) parallel ist und das Licht nach Austreten aus der Austrittsfläche (32) schräg in die erste Fläche (21) eintritt.

10. Baugruppe für eine optische Anzeige nach Anspruch 1, wobei:
eine einstückige Struktur durch das Lichtwegänderungselement (30) und das optomechanische Modul (10) mittels einer Schraubverbindung, Verkleben, Verschweißen oder Einschnappen gebildet wird; und
die einstückige Struktur in dem gemeinsamen Träger montiert wird.

11. Intelligente am Körper tragbare Vorrichtung, umfassend:
einen Rahmen (200);
einen Schenkel (300); und
die Baugruppe (100) für eine optische Anzeige nach einem der Ansprüche 1 bis 10, wobei:
das optomechanische Modul (10) und das Lichtwegänderungselement (30) in dem Schenkel (300) angeordnet sind; und
das optische Transmissionselement (20) in dem Rahmen (200) angeordnet ist.

12. Intelligente am Körper tragbare Vorrichtung nach Anspruch 11, wobei:
zwei Rahmen (200), zwei Schenkel (300) und zwei Baugruppen (100) für eine optische Anzeige vorgesehen sind;
die optomechanischen Module (10) und die Lichtwegänderungselemente (30) von jeder der zwei Baugruppen (100) für eine optische Anzeige in einem entsprechenden Schenkel der zwei Schenkel (300) angeordnet sind; und
das optische Transmissionselement (20) von jeder der zwei Baugruppen (100) für eine optische Anzeige in einem entsprechenden Rahmen der zwei Rahmen (200) angeordnet ist.

## Revendications

1. Ensemble d'affichage optique (100), comprenant :
un module opto-mécanique (10) configuré pour diffuser de la lumière en vue de projeter une image ;
un élément de transmission optique (20) pourvu d'une première surface (21), d'une deuxième surface (23) opposée à la première surface (21), et d'une troisième surface (25) reliant la première surface (21) à la deuxième surface (23), l'élément de transmission optique (20) étant configuré pour recevoir la lumière sur la première surface (21) et réfléchir la lumière dans un espace intérieur entre la première surface (21) et la deuxième surface (23), la première surface (21) formant un premier angle avec une surface émettrice de lumière (11) du module opto-mécanique (10) ; et
un élément de modification du trajet lumineux (30) disposé entre l'élément de transmission optique (20) et le module opto-mécanique (10), l'élément de modification du trajet lumineux (30) étant configuré pour recevoir la lumière et diffuser la lumière sur la première surface (21), la lumière sortant de la première surface (21), une distance entre la troisième surface (25) et un centre d'une position à laquelle la lumière sort de la première surface (21) s'inscrivant dans une plage prédéterminée,
**caractérisé en ce que** l'élément de modification du trajet lumineux (30) est combiné avec le module opto-mécanique (10) au moyen d'un support commun, l'élément de modification du trajet lumineux (30) étant espacé du module opto-mécanique (10) ou fixé à celui-ci.

2. Ensemble d'affichage optique selon la revendication 1, dans lequel la distance entre la troisième surface (25) et le centre de la position à laquelle la lumière sort de la première surface (21) est égale à une distance entre un axe central de l'élément de transmission optique (20) et la troisième surface (25).

3. Ensemble d'affichage optique selon la revendication 2, dans lequel la lumière sort perpendiculairement à la première surface (21).

4. Ensemble d'affichage optique selon la revendication 1, dans lequel la distance entre la troisième surface (25) et le centre de la position à laquelle la lumière sort de la première surface (21) est inférieure à la distance entre l'axe central de l'élément de transmission optique (20) et la troisième surface (25).

5. Ensemble d'affichage optique selon la revendication 4, dans lequel la lumière sort en formant un deuxième angle avec la première surface (21).

6. Ensemble d'affichage optique selon la revendication 1, dans lequel :
l'élément de transmission optique (20) est configuré pour diffuser la lumière depuis la première surface (21) vers un œil humain ; et
le centre de la position à laquelle la lumière sort de la première surface (21) est situé à l'intérieur d'une projection orthographique de l'œil humain sur la première surface (21).

7. Ensemble d'affichage optique selon la revendication 1, dans lequel :
l'élément de transmission optique (20) est configuré pour diffuser la lumière depuis la première surface (21) vers un œil humain ; et
le centre de la position à laquelle la lumière sort de la première surface (21) et le module opto-mécanique (10) sont situés respectivement de part et d'autre d'une projection orthographique de l'œil humain sur la première surface (21).

8. Ensemble d'affichage optique selon la revendication 2 ou 6, dans lequel l'élément de modification du trajet lumineux (30) est pourvu d'une surface d'incidence (31) et d'une surface d'émergence (32), la surface d'incidence (31) étant parallèle à la surface émettrice de lumière (11), et la lumière pénétrant perpendiculairement dans la première surface (21) après être sortie de la surface d'émergence (32).

9. Ensemble d'affichage optique selon la revendication 4 ou 7, dans lequel l'élément de modification du trajet lumineux (30) est pourvu d'une surface d'incidence (32) et d'une surface d'émergence (31), la surface d'incidence (31) étant parallèle à la surface émettrice de lumière (11), et la lumière pénétrant obliquement dans la première surface (21) après être sortie de la surface d'émergence (32).

10. Ensemble d'affichage optique selon la revendication 1, dans lequel :
une structure monobloc est formée par l'élément de modification du trajet lumineux (30) et le module opto-mécanique (10) au moyen d'une liaison filetée, d'un collage, d'un soudage, ou d'un encliquetage ; et
la structure monobloc est montée dans le support commun.

11. Dispositif intelligent à porter sur soi, comprenant :
une monture (200) ;
une branche (300) ; et
l'ensemble d'affichage optique (100) selon l'une quelconque des revendications 1 à 10,
dans lequel :
le module opto-mécanique (10) et l'élément de modification du trajet lumineux (30) sont disposés dans la branche (300) ; et
l'élément de transmission optique (20) est disposé dans la monture (200).

12. Dispositif intelligent à porter sur soi selon la revendication 11, dans lequel :
il est prévu deux montures (200), deux branches (300), et deux ensembles d'affichage optique (100) ;
les modules opto-mécaniques (10) et les éléments de modification du trajet lumineux (30) de chacun des deux ensembles d'affichage optique (100) sont disposés dans une branche correspondante des deux branches (300) ; et
l'élément de transmission optique (20) de chacun des deux ensembles d'affichage optique (100) est disposé dans une monture correspondante des deux montures (200).
